# EUROPEAN PATENT SPECIFICATION

(11) **EP 0 409 295 B1**
(45) Date of publication and mention of the grant of the patent: **21.09.1994**
(21) Application number: 90201526.2
(22) Date of filing: 13.06.1990
(51) Int. Cl.: B60J 7/04, B60J 3/02

(54) **Sliding roof for a vehicle**
Schiebedach für ein Kraftfahrzeug
Toit ouvrant pour un véhicule

(30) Priority: 11.07.1989 NL 8901782
(43) Date of publication of application: 23.01.1991
(73) Proprietor: VERMEULEN-HOLLANDIA OCTROOIEN II B.V., NL-2031 EA Haarlem (NL)
(72) Inventor: Huyer, Johannes Nicolaas, NL-1991 BN Velserbroek (NL)
(74) Representative: de Bruijn, Leendert C.

(56) References cited:
- EP-A- 0 035 371
- EP-A- 0 338 614
- DE-A- 2 923 904
- DE-A- 3 248 413
- DE-C- 3 527 839
- US-A- 4 674 789

## Description

The invention relates to a sliding roof according to the preamble of claim 1.

Such sliding roofs are known in various embodiments (e.g. from DE-A-2923904), both as normal sliding roofs and as tilting and sliding roofs in which the panel can also be tilted upwardly from the closed position to a venting position. In case of a transparent panel the sun shade serves to fully or partially close the roof opening to light when the panel is in the closed position or venting position. When the panel is slid backwardly the sun shade is automatically carried along so that the roof opening is opened completely.

The invention has the object to increase the uses of the known sliding roofs.

For this purpose the sliding roof according to the invention has the features of the characterizing portion of claim 1.

Due to the invention it is made possible to open the roof opening by the panel and consequently provide for a good ventilation, but to close the sun shade at least partially thereby obstructing the sun light and thus offering the passengers of the vehicle a pleasant cooling without this being eliminated by the radiation heat of the sun. The cooling effect in the interior of the vehicle will generally be stronger in this way than in case of a tilting and sliding roof wherein the panel is set in the venting position and the sun shade is closed partially. Of course, the ventilation with the sliding roof according to the invention will be stronger when there are provided ventilation apertures or louvers in the sun shade, while in that case it is also possible to close the sun shade completely but still effecting a ventilation. For this purpose there could also be provided ventilation apertures in the frame or the roof lining.

The invention will hereafter be elucidated with reference to the drawing showing an embodiment of the sliding roof according to the invention by way of example.

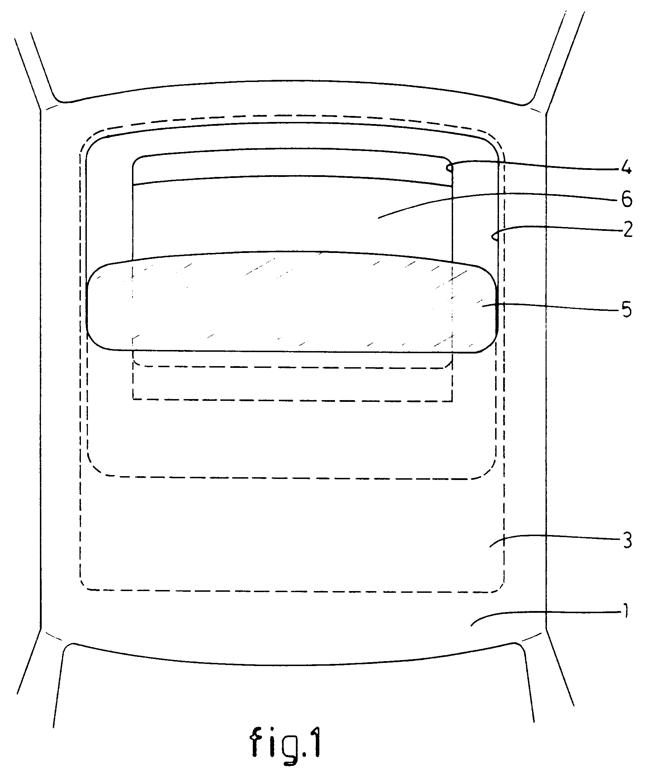

Fig. 1 is a very schematic plan view of a tilting and sliding roof according to the invention mounted into a vehicle.

Fig. 2-5 are longitudinal sectional views of the mounted tilting and sliding roof according to fig. 1, in various positions.

In the drawing there is shown an embodiment of a sliding roof or a tilting and sliding roof, respectively that is adapted to be mounted under the fixed roof 1 of a vehicle, such as an automobile, wherein an opening 2 is made or saved in the fixed roof 1.

The sliding roof comprises a stationary frame 3 having a passage opening 4 substantially lying under the opening 2 in the fixed roof 1 in the mounted condition of the sliding roof. The frame 3 movably supports a panel 5 which, in general, is made at least partially of a transparant rigid material, such as glass or transparant plastic. The panel can be moved by a displacement mechanism which is drivable manually or by a motor. Such a displacement mechanism is widely known and does not form part of the invention so that a description thereof is omitted.

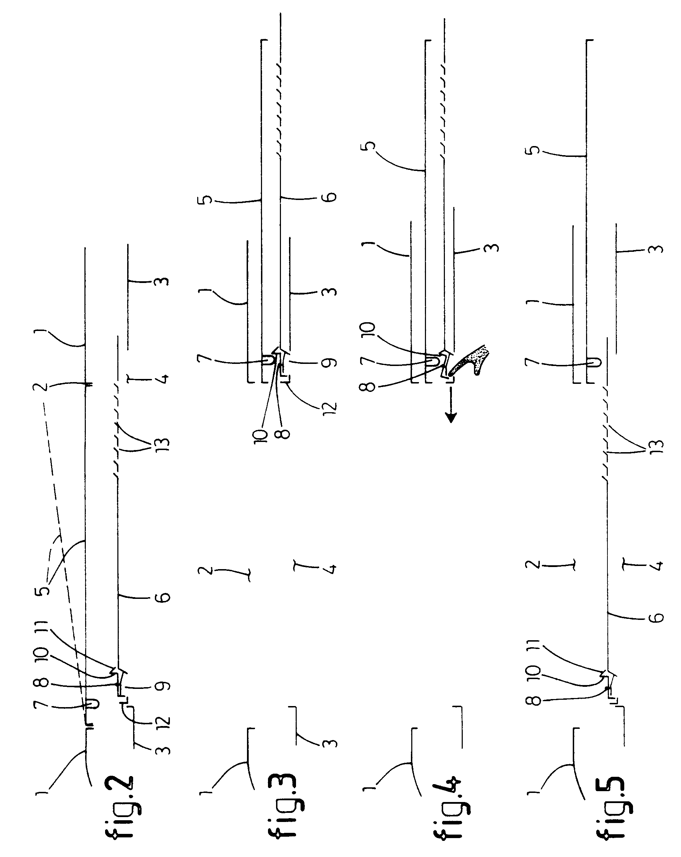

The panel 5 closes the opening 2 in the fixed roof 1 in its closed position (fig. 2) and is displaceable from this closed position first downwardly and then backwardly between the fixed roof and the rear part of the stationary frame 3 such that the roof opening 2 is opened fully or partially. From this position, the panel 3 can be displaced in reverse sense to the closed position. If the sliding roof is constructed as a tilting and sliding roof or the panel 5 may also be tilted upwardly from its closed position to a venting position (see the dash line in fig. 2).

The sliding roof further comprises a sun shade 6 adapted to be slid, for example manually, back and forth and for this purpose it is guided with both side edges in a guide rail of the frame 3. In its front, closed position the sun shade 6 closes the passage opening 4 in the stationary frame 3, while the sun shade 6 is adapted to be slid from this closed position backwardly into the space between the fixed roof 1 of the vehicle and the rear portion of the stationary frame 3 (fig. 3 and 4).

On behalf of the rearward sliding movement of the sun shade 6 together with the movement of the panel 5 there is provided a carrier device. In the embodiment shown by way of example this carrier device comprises the stiffening edge formed on the underside of the panel 5 near the front edge thereof and serving as carrier means 7 adapted to come into engagement with a coupling means 8 being mounted on the sun shade 6 in the neighbourhood of a hand grip 9 for manually operating the sun shade 6.

The coupling means 8 which is provided in the sun shade in a movable manner, in this case tiltable about a horizontal axis, to be able to move between an operative coupling position and an inoperative uncoupling position. By a spring means (not shown) the coupling means is loaded to its operative coupling position. In this operative coupling position an upright edge 10 of the coupling means 8 protrudes upwardly to such an extent that it is lying in the path of the carrier means 7 of the panel 5. On its rear side the upright edge is provided with a backwardly and downwardly inclining ramp 11.

At the front edge of the sun shade 6 there is formed a stiffening edge 12 to provide rigidity to the sun shade 6. This stiffening edge 12 projects downwardly from the plane of the sun shade 6 in order to stay out of engagement with the carrier means 7 of the panel 5.

In the rear portion of the sun shade ventilation apertures 13 are formed to provide for ventilation between the interior of the vehicle and the open air in the closed position of the sun shade 6.

The operation of the sliding roof according to the invention is as follows:
Fig. 2 illustrates the fully closed position of the sliding roof, wherein both the panel 5 and the sun shade 6 are in their front closed position.

From this closed position the panel 5 may be displaced slightly downwardly by the displacement mechanism as a result of which the panel 5 is able to be slid backwardly under the fixed roof 1. During this backward displacement the carrier means 7 under the panel 5 will come into engagement with the upright edge 10 of the coupling means 8 on the sun shade 6 so that the sun shade 6 will be carried along backwardly by the panel 5.

Fig. 3 shows the fully opened position of the sliding roof wherein the panel 5 and the sun shade 6 are between the fixed roof 1 and the rear portion of the stationary frame 3, or the roof lining of the vehicle, respectively, to such an extent that only the portion of the sun shade 6 having the hand grip 9 projects on the front side.

As is shown in fig. 4 it is possible in this position to operate the coupling means 8 near the hand grip 9 of the sun shade so that the upright edge 10 of the coupling means 8 is moved downwardly and may pass the carrier means 7 at the underside of the panel 5 so that the sun shade 6 may be displaced forwardly beyond the panel 5 to the closed position, as is shown by fig. 5. In this position an air stream between the interior of the vehicle and the open air may take place through the ventilation apertures 13 in the sun shade 6, but the sun-rays are obstructed by the sun shade 6 so that a pleasant cooling effect can be obtained in the interior of the vehicle. Of course, the operation of the coupling means 8 can take place not only in the fully opened position according to fig. 4, but also in any intermediate position of the panel 5 and the sun shade 6.

If the panel 5 is displaced from the position of fig. 5 in reverse sense to the closed position, the carrier means 7 will run up against the inclined ramp 11 of the upright edge 10 of the coupling means 8 when the panel 5 is near the front position, whereby the coupling means 8 will tilt against the spring pressure and in this manner the carrier means 7 may automatically pass the upright edge 10 of the coupling means 8 and, with a subsequent backward movement of the panel 5, the carrier means 7 is able to carry along the sun shade 6 again.

From the foregoing it will be clear that the invention provides a sliding roof offering many possibilities to ventilate in combination with a high operational comfort.

The invention is not restricted to the embodiment discribed hereinbefore and shown in the drawing by way of example, which can be varied in different ways within the scope of the invention. For example it is possible to make the panel of an opaque material and to construct the sun shade as a cover for the under side of the panel.

## Claims

1. Sliding roof for a vehicle having an opening (2) in its fixed roof (1), comprising a panel (5) being displaceable between a closed position in which it closes the opening (2) in the fixed roof (1), and an open position in which it has been slid from the closed position backwardly under the fixed roof (1) thereby at least partially opening the roof opening (2); a sun shade (6) being movable below the panel (5) between a closed position under the roof opening (2) and a backwardly displaced position under the fixed roof (1); said sun shade being provided with a transverse stiffening (13) at the front edge; and a carrier device (7, 8) for moving the sun shade (6) at least backwardly along with the panel (5), said carrier device including an edge (7) provided under the panel (5) and a coupling means (8) mounted to the sun shade, **characterized** in that the coupling means (8) of the carrier device (7, 8) is adjustable between an operative coupling position and an inoperative uncoupling position such that, in the backwardly slid position of the panel (5), the sun shade (6) is movable forwardly beyond the panel (5) to its closed position, the stiffening (13) of the sun shade projecting downwardly from the plane of the sun shade (6).

2. Sliding roof according to claim 1, wherein the coupling means (8) is biased to the operative position, for instance by a spring means.

3. Sliding roof according to claim 1 or 2, wherein the sun shade (6) is provided near the front edge with a hand grip (9) formed under the sun shade, and the coupling means (8) being disposed in the neighbourhood of the hand grip (9) and being operable through the hand grip.

## Patentansprüche

1. Schiebedach für ein Fahrzeug mit einer Öffnung (2) in seinem festen Dach (1), wobei das Schiebedach versehen ist mit: einem Deckel (5), welcher zwischen einer geschlossenen Stellung, in welcher er die in dem festen Dach (1) ausgebildete Öffnung (2) verschließt, und einer geöffneten Stellung, in welcher er ausgehend von der geschlossenen Stellung nach hinten unter das feste Dach (1) verschoben ist, und dabei die Dachöffnung (2) zumindest teilweise öffnet, verlagert werden kann; einer Sonnenblende (6), welche unterhalb des Deckels (5) zwischen einer unterhalb der Öffnung (2) befindlichen geschlossenen Stellung und einer nach hinten unter das feste Dach (1) verlagerten Stellung bewegbar ist, wobei die Sonnenblende mit einer Querversteifung (13) an ihrer Vorderkante versehen ist; und einer Trägereinrichtung (7, 8) zum Bewegen der Sonnenblende (6) zumindest zusammen mit dem Deckel (5) nach hinten, wobei die Trägereinrichtung eine unterhalb des Deckels befindliche Kante und eine an der Sonnenblende montierte Kupplungseinrichtung (8) aufweist, dadurch gekennzeichnet, daß die Kupplungseinrichtung (8) der Trägereinrichtung (7, 8) zwischen einer eingekuppelten Arbeitsstellung und einer ausgekuppelten Außer-Betrieb-Stellung derart einstellbar ist, daß in der nach hinten geschobenen Stellung des Deckels (5) die Sonnenblende (6) nach vorne über den Deckel (5) hinaus in ihre geschlossene Stellung verschiebbar ist, wobei die Versteifung (13) der Sonnenblende ausgehend von der Ebene der Sonnenblende (6) nach unten ragt.

2. Schiebedach nach Anspruch 1, wobei die Kupplungseinrichtung (8) in eine betriebsbereite Stellung vorgespannt ist, beispielsweise mittels einer Federeinrichtung.

3. Schiebedach nach Anspruch 1 oder 2, wobei die Sonnenblende (6) in der Nähe der Vorderkante mit einem unter der Sonnenblende ausgebildeten Handgriff (9) versehen ist, und die Kupplungseinrichtung (8) in der Nähe des Handgriffs (9) ausgebildet ist und mittels dieses Handgriffs betätigbar ist.

## Revendications

1. Toit coulissant pour un véhicule ayant une ouverture (2) dans son toit fixe (1), comportant un panneau (5) pouvant être déplacé entre une position fermée dans laquelle il ferme l'ouverture (2) dans le toit fixe (1) et une position ouverte dans laquelle on le fait coulisser depuis la position fermée vers l'arrière au-dessous du toit fixe (1) afin de dégager au moins partiellement l'ouverture (2) du toit ; un pare-soleil (6) mobile au-dessous du panneau (5) entre une position fermée sous l'ouverture (2) du toit et une position déplacée vers l'arrière au-dessous du toit fixe (1) ; ledit pare-soleil étant pourvu d'un raidissement transversal (13) au bord avant ; et un dispositif de support (7, 8) pour déplacer le pare-soleil (6) au moins vers l'arrière avec le panneau (5), ledit dispositif de support comprenant un bord (7) prévu sous le panneau (5) et un moyen d'accouplement (8) monté sur le pare-soleil, caractérisé en ce que le moyen d'accouplement (8) du dispositif (7, 8) de support est réglable entre une position active d'accouplement et une position inactive de désaccouplement afin que, dans la position de coulissement vers l'arrière du panneau (5), le pare-soleil (6) puisse être déplacé vers l'avant au-delà du panneau (5) jusqu'à sa position fermée, le raidissement (13) du pare-soleil faisant saillie vers le bas du plan du pare-soleil (6).

2. Toit ouvrant selon la revendication 1, dans lequel le moyen d'accouplement (8) est rappelé vers la position active, par exemple par un moyen à ressort.

3. Toit ouvrant selon la revendication 1 ou 2, dans lequel le pare-soleil (6) est pourvu, à proximité du bord avant, d'une poignée (9) formée au-dessous du pare-soleil, et le moyen d'accouplement (8) étant disposé au voisinage de la poignée (9) et pouvant être manoeuvré à l'aide de la poignée.
